# FASCICULE DE BREVET EUROPEEN

(11) **EP 1 963 810 B1**
(45) Date de publication et mention de la délivrance du brevet: **05.06.2013**
(21) Numéro de dépôt: 06847092.1
(22) Date de dépôt: 20.12.2006
(51) Int. Cl.: G01M 3/32, G01N 15/08, G01N 35/10, G01M 3/22

(54) **DISPOSITIF DE MESURE DE PERMEATION D'UN CORPS CREUX TEL QU'UN RECIPIENT**
VORRICHTUNG ZUM MESSEN DER DURCHLÄSSIGKEIT EINES HOHLKÖRPERS, WIE Z.B. EINES BEHÄLTERS
DEVICE FOR MEASURING THE PERMEATION OF A HOLLOW BODY SUCH AS A CONTAINER

(30) Priorité: 22.12.2005 FR 0513165
(43) Date de publication de la demande: 03.09.2008
(73) Titulaire: Sidel Participations, 76930 Octeville Sur Mer (FR)
(72) Inventeur: PERNEL, Yann, 76930 Octeville Sur Mer (FR)
(74) Mandataire: Cabinet Plasseraud
(86) Numéro de dépôt international: PCT/FR2006/002813
(87) Numéro de publication internationale: WO 2007/077335

(56) Documents cités:
- WO-A-02/088657
- DE-A1- 10 240 295
- DE-A1- 10 350 519
- FR-A- 2 844 596
- US-A1- 2002 194 899
- US-A1- 2004 040 372
- US-A1- 2004 177 676
- US-B1- 6 964 191

## Description

La présente invention concerne un dispositif de détermination de propriétés de perméation d'un corps creux en matière perméable à au moins un élément gazeux.

L'invention s'applique notamment au domaine des emballages, tels que des récipients en matière plastique, destinés à contenir un liquide alimentaire, éventuellement sous pression.

A titre d'exemple, le récipient en matière plastique est une bouteille en polypropylène ou PET (polyéthylène téréphtalate ou poly-téréphtalate d'éthylène- glycol).

On désigne ici par perméation tout phénomène physique et/ou chimique conduisant au passage d'un gaz au travers de l'objet étudié.

Par perméation, on désigne notamment ici la fuite d'élément gazeux, au travers de microfissures dans la paroi de l'objet étudié, ou bien encore la diffusion de l'élément gazeux au travers de la paroi de l'objet étudié.

Dans les dispositifs testeurs connus de l'art antérieur, employés pour tester des objets sensiblement plans, on fait circuler un gaz porteur, par exemple de l'azote, dans une première chambre, et l'on fait circuler un gaz testeur, par exemple de l'oxygène, dans une deuxième chambre, la première et la deuxième chambres étant séparées par la paroi de l'objet à étudier.

Le flux issu de la chambre alimentée en gaz porteur est envoyé à un appareil d'analyse chimique, connu en soi, adapté pour détecter la présence, voire de mesurer la quantité de gaz testeur présent dans ce flux.

Cet appareil d'analyse chimique est par exemple un spectromètre de masse.

Lorsque l'on souhaite étudier les propriétés de perméation d'un corps creux, tel qu'un emballage tridimensionnel en matière souple, dans sa géométrie d'utilisation ultérieure, il est connu de placer ce corps creux dans une atmosphère de gaz testeur, et de faire circuler à l'intérieur du corps creux un flux de gaz porteur, le flux sortant étant acheminé à un appareil de détection et de mesure. On peut se reporter, par exemple aux documents US 6 857 307 ou US 2004/0040372.

Il est bien entendu impossible de placer sous vide le corps creux sans le déformer de manière irréversible. Aussi, pour dessorber les molécules gazeuses présentes dans la matière plastique du corps creux, il est conventionnel de faire circuler pendant des jours le gaz porteur pour atteindre un état stationnaire dans lequel les mesures de perméation peuvent être effectuées.

Le temps nécessaire pour obtenir cet état stationnaire est d'autant plus important que l'épaisseur de paroi et/ou le volume interne du corps creux est grand.

Pour réduire ce temps d'établissement de régime stationnaire, il a été proposé de baisser la pression de manière uniforme de part et d'autre de la paroi du corps creux.

La demanderesse a constaté que des erreurs importantes de mesure peuvent être liées à un artefact provenant d'une perte d'étanchéité entre le volume interne du corps creux et le volume entourant le corps creux.

La demanderesse a constaté en particulier que, lorsque le corps creux à étudier comporte une ouverture telle que notamment un col, ce qui est le cas, par exemple, des bouteilles, les dispositifs conventionnels ne permettent pas de garantir une étanchéité satisfaisante au col de bouteille.

Le document WO 02/088657 A décrit un dispositif de mesure de perméation d'un corps creux pourvu d'un col, comprenant une chambre dans laquelle est placé le corps sur un support, ledit corps creux délimitant avec la chambre un espace interne et un espace externe et des moyens d'étanchéité entre lesdits espaces et l'espace extérieur à pression atmosphérique, lesdits moyens comprenant plusieurs joints, des vis et une plaque, lesdits joints étant logés dans des gorges du support et étant en saille par rapport au bord latéral dudit support, délimitant ainsi plusieurs espaces.

La demanderesse s'est attachée à pallier ces problèmes.

A cette fin, l'invention se rapporte, selon un premier aspect, à un dispositif de mesure de perméation d'un corps creux pourvu d'une ouverture telle que notamment un col, ce dispositif comprenant une chambre dans laquelle est placé le corps creux sur un support ; ce corps creux, lorsque placé sur son support délimitant avec la chambre un espace interne et un espace externe, le dispositif étant pourvu de moyens d'étanchéité entre l'espace interne et l'espace externe, les moyens d'étanchéité comprenant trois joints, à savoir un premier joint, un deuxième joint dit intermédiaire, et un troisième joint, ces trois joints étant logés dans des gorges d'un corps du support, ces joints étant en saillie par rapport au bord latéral du corps du support et étant aptes et configurés pour venir en appui contre la face interne de l'ouverture du corps creux ; le corps du support, l'ouverture du corps creux et les joints délimitant ainsi deux espaces disposés entre l'espace interne et l'espace externe, un premier espace étant bordé par un premier joint et un joint intermédiaire, le deuxième espace étant délimité par le joint intermédiaire et un troisième joint.

Le dispositif présente, selon diverses réalisations, les caractères suivants, le cas échant combinés.
- le dispositif comporte des moyens permettant de maintenir une pression de fluide déterminée dans le deuxième espace, lesdits moyens comprenant avantageusement un conduit interne au corps du support et relié à une source de gaz comprimé ;
- le dispositif comprend des moyens permettant de détecter une fuite de gaz dans le premier espace, fuite provenant soit du deuxième espace, soit de la chambre dans laquelle est placé le corps creux. Une manière envisageable pour contrôler cette fuite peut être de détecter une variation de pression dans ledit espace, lesdits moyens comprenant alors avantageusement un conduit interne au corps du support et reliant un capteur de pression au premier espace ; une autre manière peut être de détecter un changement de composition ou de concentration du gaz contenu dans ledit espace, lesdits moyens comprenant alors avantageusement un conduit interne au corps du support et reliant un détecteur approprié tel qu'un spectromètre au premier espace ;
- le corps du support est sensiblement cylindrique et trois gorges annulaires étagées logeant les joints sont ménagées à la périphérie du corps du support ;
- les trois joints sont sensiblement identiques et équidistants ;
- le corps du support est en saillie sur une base, cette base étant disposée sur un socle, un joint étant disposé entre la base et le socle, deux demi-coquilles venant recouvrir la base et formant support d'appui pour une cloche délimitant la chambre, le corps du support passant au travers d'une découpe des demi-coquilles ;
- lorsque le corps creux est en place, la pression dans le premier espace est sensiblement égale à la pression atmosphérique, et la pression dans le deuxième espace est supérieure à la pression dans l'espace interne.

D'autres objets et avantages de l'invention apparaîtront au cours de la description suivante d'un mode de réalisation actuellement préféré, description qui va être effectuée en se référant aux dessins annexés, dans lesquels :
- la figure 1 est un schéma de principe d'une installation de mesure dans laquelle l'invention peut être mise en oeuvre ;
- la figure 2 est une vue en perspective d'un mode de mise en oeuvre de l'invention ;

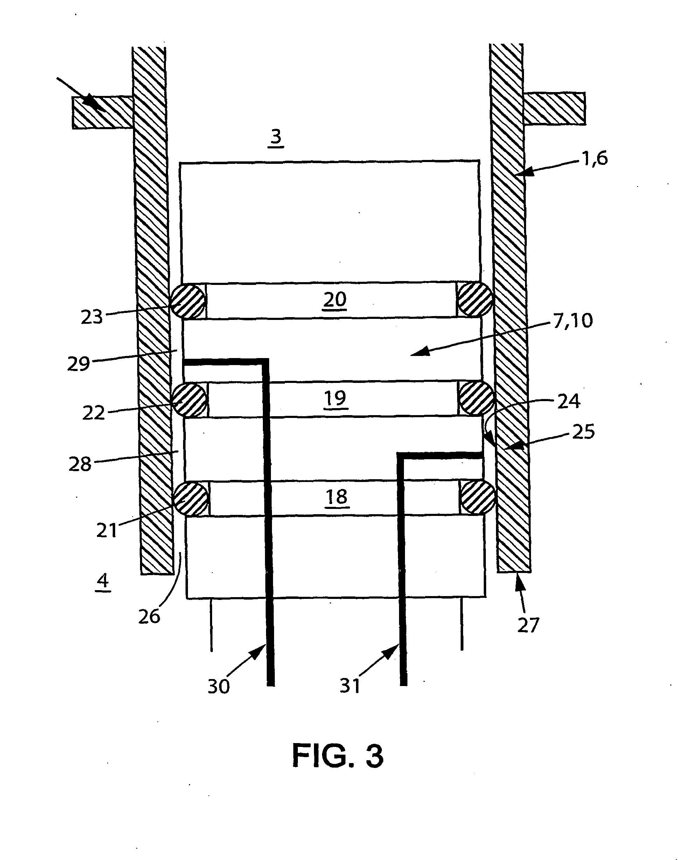

- la figure 3 est une vue en coupe longitudinale selon le plan III-III de la figure 2.

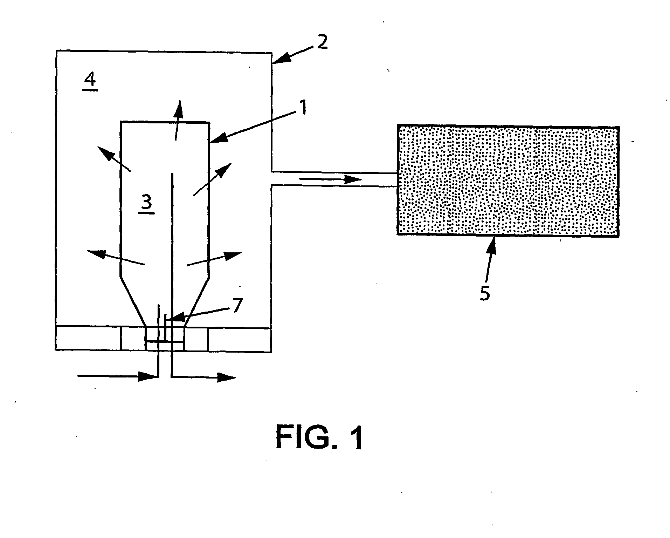

L'on se reporte à la figure 1.

Sur cette figure 1 est représenté un corps 1 creux placé dans une chambre 2. Ce corps 1 creux délimite ainsi un espace interne 3 et un espace externe 4 qui sont isolés l'un de l'autre. Plus précisément, l'espace interne 3 est constitué par l'intérieur du corps 1 creux et l'espace externe 4 est celui qui entoure le corps 1 creux dans la chambre 2. Un support 7, qui sera détaillé plus loin maintient le corps 1 creux et l'isole de l'extérieur. Un gaz testeur, tel que par exemple de l'hélium est introduit dans l'espace interne 3. La pression dans l'espace interne 3 est par exemple de l'ordre de 1 bar.

L'espace externe 4 est relié à un appareil de détection et de mesure, tel qu'un spectromètre 5 de masse.

L'espace externe 4 est placé en dépression par rapport à l'espace interne 3, de sorte que, lorsque le corps 1 creux à tester est perméable, une migration du gaz qu'il contient est favorisée en direction de l'espace interne 3, ce qui provoque un changement de constitution du gaz testeur détectable par le spectromètre 5 de masse.

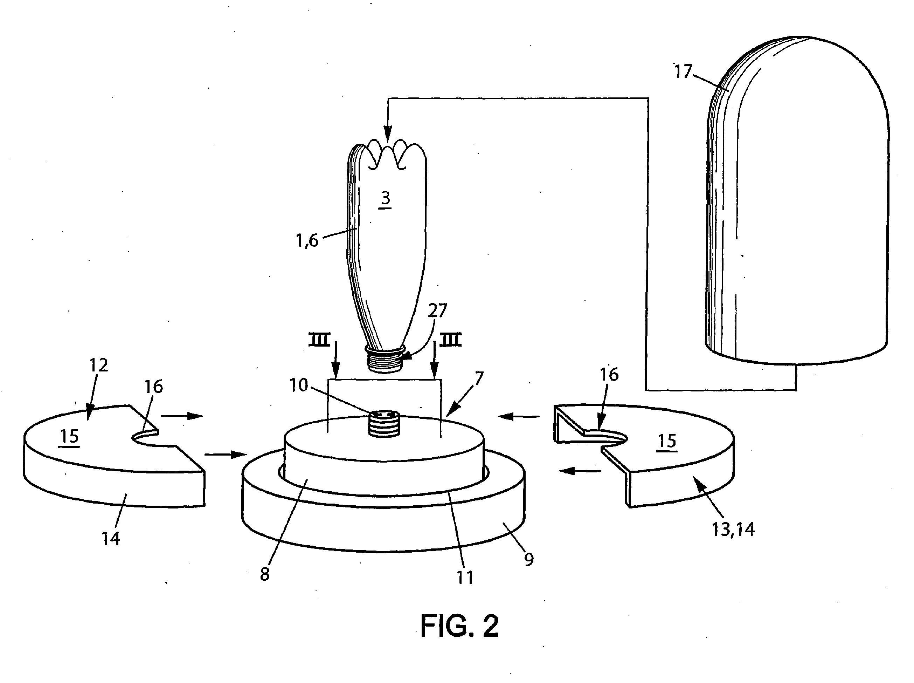

L'on se reporte maintenant à la figure 2.

Un corps 1 creux tel qu'une bouteille 6 est destiné à être placé, col vers le bas, sur un support 7. Ce support 7 comprend une base 8, un socle 9 et un corps 10 de support en saillie pour recevoir le corps 1 creux.

La base 8 est en forme de disque et repose sur le socle 9. Un joint 11 torique est disposé en partie inférieure de la base 8. Un capotage, formé de deux demi-coquilles 12, 13 vient recouvrir la base 8. A cette fin, chaque demi-coquille comprend une jupe 14 et une partie supérieure 15 transversale à la jupe 14. Chaque demi-coquille est également pourvue d'une découpe 16 au travers de laquelle passe la saillie support 10.

L'espace externe 4 est délimité par une cloche 17 qui vient en appui sur le capotage formé par les deux demi-coquilles 12, 13.

L'on décrit maintenant les moyens permettant le maintien d'une étanchéité satisfaisante entre l'espace interne 3 et l'espace externe 4.

Le corps 10 du support 7 est de forme cylindrique et est pourvu de trois gorges 18, 19, 20 annulaires externes étagées.

Chacune de ces trois gorges 18, 19, 20 loge un joint 21, 22, 23. Les joints viennent en appui contre la face interne 24 du col 25 du corps 1 creux, le col étant ici constitué par le goulot de la bouteille 6, lorsque cette bouteille 6 est placée à force sur le corps 10 du support 7. Les joints 21, 22, 23 saillent en effet au-delà du bord latéral du corps 10 du support 7.

Dans une mise en oeuvre, telle que représentée, les joints 21, 22, 23 sont sensiblement identiques.

En dessous du premier joint 21, inférieur, dans l'espace 26 voisin du buvant 27 règne la pression de l'espace externe 4.

Entre le premier joint 21, inférieur, et le deuxième joint 22, intermédiaire, est délimité un espace annulaire 28 dans lequel règne la pression atmosphérique, qui n'est autre que celle ambiante lorsque le col 25 est mis en place à force sur le corps 10, en saillie, du support 7.

Entre le deuxième joint 22, intermédiaire, et le troisième joint 23, supérieur, est délimité un espace annulaire 29 dans lequel règne une pression contrôlée. Avantageusement, cette pression contrôlée est supérieure à la pression régnant dans l'espace interne 3 (au-dessus du troisième joint 23).

A cette fin, un premier conduit 30 maintient un gaz, par exemple de l'air, sous pression dans l'espace 29, ce conduit 30 comprenant une partie inférieure axiale interne au corps 10 et une partie supérieure radiale débouchant entre le deuxième joint 22 et le troisième joint 23.

Avantageusement, un second conduit 31 relie l'espace annulaire 28, dans lequel règne une pression égale à la pression atmosphérique, à un capteur de fuite tel qu'un capteur de pression (non représenté). Ce conduit 31 comprend une partie inférieure axiale interne au corps 10 du support 7 et une partie supérieure radiale débouchant entre le premier joint 21 et le deuxième joint 22. Le capteur de pression permet de déceler une perte d'étanchéité entre le premier et le deuxième joint ainsi qu'une perte d'étanchéité entre le deuxième et le troisième joint, et par conséquent entre l'espace interne 3 et l'espace externe 4. A la place du capteur de pression pourrait être disposé un détecteur de composition ou de concentration du gaz contenu dans l'espace 28, tel qu'un spectromètre, afin de détecter un changement de composition, symptomatique d'une modification de la nature du gaz dans l'espace, liée à une fuite notamment entre l'espace interne 3 et l'espace externe 4.

Il est entendu que les termes «premier», «deuxième», «troisième», «inférieur», «intermédiaire», «supérieur» ne sont pas limitatifs.

Ces termes sont employés afin de faciliter la lecture de cette description pour les joints 21, 22, 23 en référence à la mise en place du col 25 avec son ouverture vers le bas, le corps 10 du support en saillie étant orienté vers le haut du dispositif.

Cette orientation correspond à celle conventionnelle dans les appareils du commerce, qui facilite en fait la mise en place et le maintien de la cloche 17.

## Revendications

1. Dispositif de mesure de perméation d'un corps (1) creux pourvu d'une ouverture telle que notamment un col (25), ce dispositif comprenant une chambre (2) dans laquelle est placé le corps (1) creux sur un support (7) ; ce corps (1) creux, lorsque placé sur le support (7) délimitant avec la chambre (2) un espace interne (3) et un espace externe (4), le dispositif étant pourvu de moyens d'étanchéité entre l'espace interne (3) et l'espace externe (4), **caractérisé en ce que** les moyens d'étanchéité comprennent trois joints (21, 22, 23), à savoir un premier joint (21), un deuxième joint (22) dit intermédiaire, et un troisième joint (23), ces trois joints (21, 22, 23) étant logés dans des gorges (18, 19, 20) d'un corps (10) du support (7), ces joints (21, 22, 23) étant en saillie par rapport au bord latéral du corps du support et étant aptes et configurés pour venir en appui contre la face interne (24) de l'ouverture du corps (1) creux ; le corps (10) du support (7), l'ouverture du corps (1) creux et les joints (21, 22, 23) délimitant ainsi deux espaces (28, 29) disposés entre l'espace interne (3) et l'espace externe (4), un premier espace (28) étant bordé par un premier joint (21) et un joint intermédiaire (22), le deuxième espace (29) étant délimité par le joint intermédiaire (22) et un troisième joint (23).

2. Dispositif de mesure de perméation d'un corps (1) creux selon la revendication 1, **caractérisé en ce qu'**il comporte des moyens permettant de maintenir une pression de fluide déterminée dans le deuxième espace (29).

3. Dispositif de mesure de perméation d'un corps (1) creux selon la revendication 2, **caractérisé en ce que** lesdits moyens comprennent un conduit (30) interne au corps (10) du support (7) et relié à une source de gaz comprimé.

4. Dispositif de mesure de perméation d'un corps (1) creux selon l'une quelconque des revendications précédentes, **caractérisé en ce qu'**il comprend des moyens permettant de détecter une fuite de gaz dans le premier espace (28).

5. Dispositif de mesure de perméation d'un corps (1) creux selon la revendication 4, **caractérisé en ce que** lesdits moyens permettant de détecter une fuite de gaz comprennent un conduit (31) interne au corps (10) du support (7) et un capteur de pression relié par ledit conduit (31) au premier espace (28).

6. Dispositif de mesure de perméation d'un corps (1) creux selon la revendication 4, **caractérisé en ce que** lesdits moyens permettant de détecter une fuite de gaz comprennent un conduit (31) interne au corps (10) du support (7) et un capteur de composition ou de concentration de gaz relié par ledit conduit (31) au premier espace (28).

7. Dispositif de mesure de perméation d'un corps (1) creux selon l'une quelconque des revendications précédentes, **caractérisé en ce que** le corps (10) du support (7) est sensiblement cylindrique et **en ce que** trois gorges (18, 19, 20) annulaires étagées logeant les joints (21, 22, 23) sont ménagées à la périphérie du corps (10).

8. Dispositif de mesure de perméation d'un corps (1) creux selon la revendication 7, **caractérisé en ce que** les trois joints sont sensiblement identiques et équidistants.

9. Dispositif de mesure de perméation d'un corps (1) creux selon l'une quelconque des revendications précédentes, **caractérisé en ce que** le corps (10) du support (7) est en saillie sur une base (8), cette base (8) étant disposée sur un socle (9), un joint (11) étant disposé entre la base (8) et le socle (9), deux demi-coquilles (12, 13) venant recouvrir la base (8) et formant support d'appui pour une cloche (17) délimitant la chambre (2), le corps (10) du support (7) passant au travers d'une découpe (16) des demi-coquilles (12, 13).

10. Dispositif de mesure de perméation d'un corps (1) creux tel que présenté dans l'une quelconque des revendications précédentes, **caractérisé en ce que** la pression dans le premier espace (28) est sensiblement égale à la pression atmosphérique, et la pression dans le deuxième espace (29) est supérieure à celle dans l'espace interne (3).

## Patentansprüche

1. Vorrichtung zum Messen der Permeation eines Hohlkörpers (1), der mit einer Öffnung, wie insbesondere einem Hals (25) versehen ist, wobei diese Vorrichtung eine Kammer (2) umfasst, in der der Hohlkörper (1) auf einem Träger (7) angeordnet ist; wobei dieser Hohlkörper (1), wenn er auf dem Träger (7) angeordnet ist, mit der Kammer (2) einen Innenraum (3) und einen Außenraum (4) begrenzt, wobei die Vorrichtung mit Mitteln zur Abdichtung zwischen dem Innenraum (3) und dem Außenraum (4) versehen ist, **dadurch gekennzeichnet, dass** die Abdichtungsmittel drei Dichtungen (21, 22, 23) umfassen, nämlich eine erste Dichtung (21), eine zweite Dichtung (22), Zwischendichtung genannt, und eine dritte Dichtung (23), wobei diese drei Dichtungen (21, 22, 23) in Rillen (18, 19, 20) eines Körpers (10) des Trägers (7) angeordnet sind, wobei diese Dichtungen (21, 22, 23) in Bezug zum Seitenrand des Körpers des Trägers vorspringend sind und dazu geeignet und ausgeführt sind, dass sie an der Innenseite (24) der Öffnung des Hohlkörpers (1) zur Anlage gelangen; wobei der Körper (10) des Trägers (7), die Öffnung des Hohlkörpers (1) und die Dichtungen (21, 22, 23) auf diese Weise zwei Räume (28, 29) begrenzen, die zwischen dem Innenraum (3) und dem Außenraum (4) angeordnet sind, wobei ein erster Raum (28) von einer ersten Dichtung (21) und einer Zwischendichtung (22) umgeben ist, wobei der zweite Raum (29) von der Zwischendichtung (22) und einer dritten Dichtung (23) begrenzt ist.

2. Vorrichtung zum Messen der Permeation eines Hohlkörpers (1) nach Anspruch 1, **dadurch gekennzeichnet, dass** sie Mittel umfasst, die es ermöglichen, einen bestimmten Fluiddruck in dem zweiten Raum (29) aufrechtzuerhalten.

3. Vorrichtung zum Messen der Permeation eines Hohlkörpers (1) nach Anspruch 2, **dadurch gekennzeichnet, dass** die Mittel eine Leitung (30) im Inneren des Körpers (10) des Trägers (7) umfassen, die mit einer Druckgasquelle verbunden ist.

4. Vorrichtung zum Messen der Permeation eines Hohlkörpers (1) nach einem der vorhergehenden Ansprüche, **dadurch gekennzeichnet, dass** sie Mittel umfasst, die es ermöglichen, eine Gasleckage in dem ersten Raum (28) zu erfassen.

5. Vorrichtung zum Messen der Permeation eines Hohlkörpers (1) nach Anspruch 4, **dadurch gekennzeichnet, dass** die Mittel, die es ermöglichen, eine Gasleckage zu erfassen, eine Leitung (31) im Inneren des Körpers (10) des Trägers (7) und einen Druckfühler umfassen, der über die Leitung (31) mit dem ersten Raum (28) verbunden ist.

6. Vorrichtung zum Messen der Permeation eines Hohlkörpers (1) nach Anspruch 4, **dadurch gekennzeichnet, dass** die Mittel, die es ermöglichen, eine Gasleckage zu erfassen, eine Leitung (31) im Inneren des Körpers (10) des Trägers (7) und einen Sensor für die Zusammensetzung oder Konzentration des Gases umfassen, der über die Leitung (31) mit dem ersten Raum (28) verbunden ist.

7. Vorrichtung zum Messen der Permeation eines Hohlkörpers (1) nach einem der vorhergehenden Ansprüche, **dadurch gekennzeichnet, dass** der Körper (10) des Träger (7) im Wesentlichen zylindrisch ist, und dass drei abgestufte ringförmige Rillen (18, 19, 20), in den sich die Dichtungen (21, 22, 23) befinden, an der Peripherie des Körpers (10) ausgespart sind.

8. Vorrichtung zum Messen der Permeation eines Hohlkörpers (1) nach Anspruch 7, **dadurch gekennzeichnet, dass** die drei Dichtungen im Wesentlichen identisch und gleich beabstandet sind.

9. Vorrichtung zum Messen der Permeation eines Hohlkörpers (1) nach einem der vorhergehenden Ansprüche, **dadurch gekennzeichnet, dass** der Körper (10) des Trägers (7) auf einer Basis (8) vorspringend ist, wobei diese Basis (8) auf einem Sockel (9) angeordnet ist, wobei eine Dichtung (11) zwischen der Basis (8) und dem Sockel (9) angeordnet ist, wobei zwei Halbschalen (12, 13) die Basis (8) überdecken und eine Auflagerung für eine Glocke (17) bilden, die die Kammer (2) begrenzt, wobei der Körper (10) des Trägers (7) durch einen Ausschnitt (16) der Halbschalen (12, 13) hindurch verläuft.

10. Vorrichtung zum Messen der Permeation eines Hohlkörpers (1), wie in einem der vorhergehenden Ansprüche dargestellt, **dadurch gekennzeichnet, dass** der Druck in dem ersten Raum (28) im Wesentlichen gleich wie der Luftdruck ist, und dass der Druck in dem zweiten Raum (29) größer als jener im inneren Raum (3) ist.

## Claims

1. A device for measuring the permeation of a hollow body (1) provided with an opening such as, in particular, a neck (25), this device comprising a chamber (2) in which the hollow body (1) is placed on a support (7); this hollow body (1), when placed on the support (7) delimiting with the chamber (2) an inner space (3) and an outer space (4), the device being provided with sealing means between the inner space (3) and the outer space (4), **characterized in that** the sealing means comprise three seals (21, 22, 23), namely a first seal (21), a second seal (22) known as an intermediate seal, and a third seal (23), these three seals (21, 22, 23) being housed in grooves (18, 19, 20) of a body (10) of the support (7), these seals (21, 22, 23) jutting out relative to the side edge of the body of the support and being able and configured to bear against the inner face (24) of the opening of the hollow body (1); the body (10) of the support (7), the opening of the hollow body (1) and the seals (21, 22, 23) thus delimiting two spaces (28, 29) positioned between the inner space (3) and the outer space (4), a first space (28) being bordered by a first seal (21) and an intermediate seal (22), the second space (29) being delimited by the intermediate seal (22) and a third seal (23).

2. The device for measuring the permeation of a hollow body (1) as claimed in claim 1, **characterized in that** it comprises means that make it possible to maintain a given fluid pressure in the second space (29).

3. The device for measuring the permeation of a hollow body (1) as claimed in claim 2, **characterized in that** said means comprise a duct (30) inside the body (10) of the support (7) and connected to a source of compressed gas.

4. The device for measuring the permeation of a hollow body (1) as claimed in any one of the preceding claims, **characterized in that** it comprises means that make it possible to detect a gas leak in the first space (28).

5. The device for measuring the permeation of a hollow body (1) as claimed in claim 4, **characterized in that** said means that make it possible to detect a gas leak comprise a duct (31) inside the body (10) of the support (7) and a pressure sensor connected via said duct (31) to the first space (28).

6. The device for measuring the permeation of a hollow body (1) as claimed in claim 4, **characterized in that** said means that make it possible to detect a gas leak comprise a duct (31) inside the body (10) of the support (7) and a gas composition or concentration sensor connected via said duct (31) to the first space (28).

7. The device for measuring the permeation of a hollow body (1) as claimed in any one of the preceding claims, **characterized in that** the body (10) of the support (7) is substantially cylindrical and **in that** three tiered annular grooves (18, 19, 20) that house the seals (21, 22, 23) are arranged at the periphery of the body (10).

8. The device for measuring the permeation of a hollow body (1) as claimed in claim 7, **characterized in that** the three seals are substantially identical and equidistant.

9. The device for measuring the permeation of a hollow body (1) as claimed in any one of the preceding claims, **characterized in that** the body (10) of the support (7) juts out from a base (8), this base (8) being placed on a pedestal (9), a seal (11) being placed between the base (8) and the pedestal (9), two half shells (12, 13) covering the base (8) and forming a support stand for a bell jar (17) that delimits the chamber (2), the body (10) of the support (7) passing through a cutout (16) in the half shells (12, 13).

10. The device for measuring the permeation of a hollow body (1) as presented in any one of the preceding claims, **characterized in that** the pressure in the first space (28) is substantially equal to atmospheric pressure, and the pressure in the second space (29) is greater than that in the inner space (3).
